Europäisches Patentamt

European Patent Office

Office européen des brevets

(19)

(11) Veröffentlichungsnummer: **0 222 107**
**B1**

(12) # EUROPÄISCHE PATENTSCHRIFT

(45) Veröffentlichungstag der Patentschrift:
20.06.90

(21) Anmeldenummer: 86112718.1

(22) Anmeldetag: 15.09.86

(51) Int. Cl.⁵: **H02K 5/167**, H02K 15/16

(54) **Verfahren zur Einstellung des Axialspiels zwischen dem Rotor und dem Stator eines Motors.**

(30) Priorität: **26.09.85 DE 3534333**

(43) Veröffentlichungstag der Anmeldung:
**20.05.87 Patentblatt 87/21**

(45) Bekanntmachung des Hinweises auf die Patenterteilung:
**20.06.90 Patentblatt 90/25**

(84) Benannte Vertragsstaaten:
**DE FR GB IT**

(56) Entgegenhaltungen:
**FR-A- 2 242 797**
**GB-A- 2 154 158**
**US-A- 3 714 705**
**US-A- 4 170 058**

(73) Patentinhaber: **Siemens Aktiengesellschaft,**
**Wittelsbacherplatz 2, D-8000 München 2(DE)**

(72) Erfinder: **Adam, Peter, Allerseeweg 25,**
**D-8706 Höchberg(DE)**
Erfinder: **Gleixner, Ronald, Hübnerweg 21,**
**D-8703 Ochsenfurt(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf ein Verfahren zur Einstellung des Axialspiels zwischen dem Rotor und dem Stator eines Motors; derartige Verfahren sind in unterschiedlicher Vorgehensweise z.B. durch die EP-PS 00 65 585 und die Europäische Patentanmeldung 01 33 527 bekannt.

Im Fall der EP-PS 00 65 585 dient zur Einstellung des Axialspiels eine auf die Rotorwelle aufgedrückte Distanzbuchse, die an ihrem dem Lager zugewandten Ende mit einem Anlaufbund versehen und mit ihrem anderen Ende in eine konzentrische Ausnehmung einer an der Stirnseite des Rotor-Blechpaketes anliegenden Isolierendscheibe mit einer dem jeweiligen Axialspiel entsprechenden axialen Eintauchtiefe einpreßbar ist.

Im Fall der Europäischen Patentanmeldung 01 33 527 wird zur Begrenzung des Axialspiels einer gleitgelagerten Welle aufgrund eines Vergleichs zwischen Ist-Axialspiel und Soll-Axialspiel in definiertem Abstand zur Stirnseite eines Wellenendes als fixierbares Anlaufteil eine Scheibe mit einer dem berechneten Axialspiel entsprechenden Scheibendicke in eine statorgehäusefeste Tasche eingesteckt.

Gemäß Aufgabe vorliegender Erfindung soll ein Verfahren zur besonders einfachen, insbesondere mit geringem Aufwand durch Handhabungsautomaten möglichen Einstellung des Axialspiels geschaffen werden; die Lösung dieser Aufgabe gelingt bei einem Verfahren der eingangs genannten Art erfindungsgemäß durch die Lehre des Anspruchs 1; die Gegenstände der Unteransprüche kennzeichnen jeweils vorteilhafte Ausgestaltungen der Erfindung.

Das erfindungsgemäße Verfahren erlaubt die Einstellung des Axialspiels ohne jegliche zusätzliche Bauteile sowie Meßwertstationen und in einer zum Einsatz von Manipulatoren besonders vorteilhaften nur axialen Handhabungsrichtung, in der auch die übrigen beim Zusammenbau des Motors gegenseitig zu verbindenden Bauteile zugeführt werden, wobei zur gewährleisteten Einhaltung des bei der Fertigung des Motors einmal eingestellten Axialspiels auch bei späterem rauhen, insbesondere stoßbelasteten, Einsatz dieser Motoren in einfacher, doch sehr wirkungsvoller Weise das Lager durch eine nach der Einstellung des Axialspiels aus der Lageraufnahme herausgeformte formschlüssige Anlage, insbesondere eine axiale Anlageschulter, in seiner Einstellage fixiert wird.

Zweckmäßigerweise wird die Anlageschulter, insbesondere bei einem Kunststoff-Lagerschild, durch Heißverstemmung oder durch einen Schmelzvorgang, vorzugsweise durch einen Ultraschall-Schmelzvorgang, herausgeformt; bei Metalllagerschilden wird die Herausformung vorteilhafterweise durch einen Prägevorgang erzielt, wobei mittels durch entsprechende Einschnitte vorgeformte Zungen des Prägen bzw. Umbiegen der Lageraufnahme in die Lagerbohrung im Sinne einer axialen Anlageschulter vereinfacht werden kann.

Durch die GB-A-2 154 158 ist zwar ein Verfahren zur Einstellung eines Axialspiels mit folgenden Verfahrensschritten bekannt:

a) in eine erste Abschlußkappe wird ein erstes Lager im Preßsitz angeordnet;

b) die erste Abschlußkappe wird gehalten,

c) eine Stirnseite eines Stators wird gegen die Abschlußkappe anliegend angeordnet;

d) in den Stator wird ein Rotor mit einer Welle eingesetzt, wobei ein Ende der Welle in das Lager eingeführt wird;

e) der Abstand zwischen der gegenüberliegenden Stirnseite des Stators und einer Stelle auf der Welle wird gemessen;

f) eine ein zweites Lager enthaltende zweite Abschlußkappe wird über dem anderen Ende der Welle angeordnet;

g) die zweite Abschlußkappe wird bezüglich des anderen Endes der Welle vorgerückt, um die Welle von dem zweiten Lager aufnehmen zu lassen, bis die zweite Abschlußkappe gegen die gegenüberliegende Stirnseite des Stators anliegt; und

h) das erste Lager wird in Richtung der zweiten Abschlußkappe um ein zu dem gemessenen Abstand in Beziehung stehendes Stück in die erste Abschlußkappe gepreßt, um das Axialspiel der Welle festzulegen.

Hierzu ist jedoch unbedingt ein Preßsitz zwischen Lager und Lageraufnahme notwendig, der trotzdem nicht mit Sicherheit die Einhaltung der fixierten Einstellage z.B. auch bei rauhem Betriebseinsatz des Motors gewährleisten kann. Beim Gegenstand vorliegender Erfindung kann auf einen Preßsitz verzichtet werden, so daß bei der automatischen Einstellung des Lagers dieses einerseits mit geringem Druck und dadurch auch bei kleinen Verstellungen genau verschoben und andererseits in der Einstellage sicher auch für einen rauhen Betriebseinsatz fixiert werden kann.

Die Erfindung sowie weitere vorteilhafte Ausgestaltungen der Erfindung werden im folgenden anhand schematisch dargestellter Ausführungsbeispiele in der Zeichnung näher erläutert; darin zeigen:

Fig. 1 einen axialen Längsschnitt durch einen dauermagneterregten Kleinmotor mit Kalottenlagerung vor der Einstellung des Axialspiels;

Fig. 2 die Anordnung nach Fig.1 nach der Einstellung des Axialspiels;

Fig. 3 in einem Detailausschnitt ein Zylinderlager vor der Einstellung des Axialspiels;

Fig. 4 die Anordnung nach Fig.3 nach der Einstellung des Axialspiels;

Fig. 5 die Anordnung nach Fig.4 nach der Ausformung einer Anlageschulter aud der Lageraufnahme;

Fig. 6 eine zweite Ausführung einer Ausformung der Anlageschulter aus der Lageraufnahme.

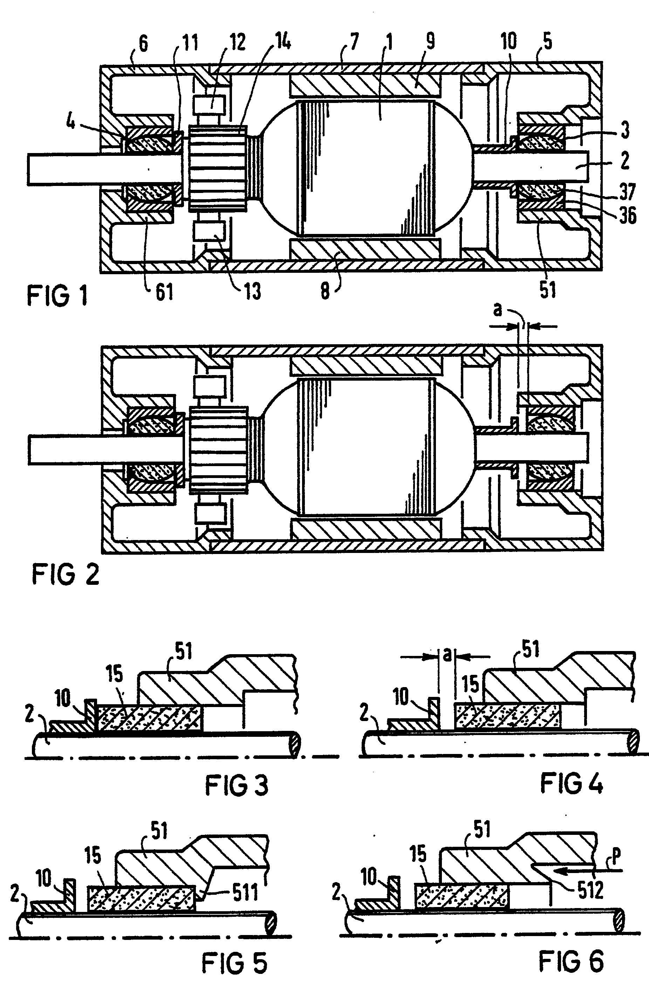

Fig.1 zeigt einen Dauermagnet-Kommutatormotor. An der Innenumfangsfläche des Statorgehäuses 7 sind das Magnetfeld erzeugende Dauermagnetschalen 8,9 angeordnet. Stirnseitig sind am Statorgehäuse 7 Lagerbügel 5,6 befestigt. Die Lagerbügel 5,6 nehmen Kalottenlagerungen 3,4 auf, in denen eine Rotorwelle 2 drehbar gelagert ist. Auf der Rotorwelle 2 ist ein bewickeltes Rotor-Blechpaket 1 befestigt. Auf dem linken Wellenende der Rotorwelle 2 ist innerhalb des Statorgehäuses 7 ein Kommutator 14 aufgeklebt. Bürstenhalter 12,13 sind in hier nicht näher dargestellter Weise in einer statorgehäusefesten Bürstenbrücke gelagert und mit einer äußeren Anschlußleitung verbunden. An die Lamellen des Kommutators 14 ist die in das Rotor-Blechpaket 1 eingewickelte Rotorwicklung mit ihren Wicklungsenden angeschlossen. Zwischen der linken Kalottenlagerung 4 und dem Kommutator 14 ist eine Anlaufscheibe 11 angeordnet; zwischen dem rechten Ende des Rotor-Blechpaketes 1 und der rechten Kalottenlagerung 3 ist auf der Rotorwelle 2 eine Distanzbuchse 10 mit einem Anlaufbund vorgesehen.

Während am linken Ende des in Fig.1,2 in einem axialen Längsschnitt dargestellten Dauermagnet-Kommutatormotors die zur Lagerung der Rotorwelle 2 vorgesehene Kalottenlagerung von Anfang an als Festlager in der Lageraufnahme 61 des linken Lagerbügels 6 angeordnet ist, kann zur erfindungsgemäßen Einstellung eines definierten, die Toleranzen des jeweils zusammengebauten Motors berücksichtigenden Axialspiels die rechte Kalottenlagerung 3 in ihrer entsprechend ausgebildeten Lagerhülse 51 des rechten Lagerschildes 5 aus der in Fig.1 dargestellten Lage mit einem Null-Axialspiel um die Wegstrecke des definierten Axialspiels "a" in die in Fig.2 dargestellte Axialspiellage nach axial rechts verschoben werden; zu Beginn der Montage des Dauermagnet-Kommutatormotors wird daher zweckmäßigerweise die in der Lagerhülse 51 im Preßsitz gehaltene Kalottenlagerung mit ihren in einer äußeren Lageraufnahme 36 gelagerten Kalotten 37 und einer in der Lageraufnahme fixierten üblichen Klemmbrille soweit nach links geschoben, daß nach dem Zusammenbau, jedoch vor der Einstellung des Axialspiels, ein spielfreier Sitz des Rotors relativ zum Stator gewährleistet ist. Durch ein axiales Vordrücken des Rotors in Richtung auf das rechte Kalottenlager um das definierte Maß des Axialspiels kann dann in einem einfachen Handhabungsvorgang ohne Notwendigkeit eines Vergleiches bzw. Messens des jeweiligen Ist- und Soll-Axialspiels die gewünschte Axialspieleinstellung vorgenommen werden.

Als besonders einfach herstellbare und gleichzeitig auch bei hohen axialen Stoßbelastungen die Einhaltung der Einstellage der Kalottenlagerung 3 in ihrer Lagerhülse 51 gewährleistende Maßnahme ist zur formschlüssigen Sicherung der Einstellage des Lagers nach einer Ausgestaltung der Erfindung vorgesehen, die äußere Lageraufnahme 36 durch einen nach der Einstellage des Axialspiels aus der Lagerhülse herausgeformte axiale Anlageschultern zu fixieren; zur Erläuterung dieser Maßnahme wird auf die Detailausschnitte der rechten Lageraufnahme gemäß den Figuren 3 bis 6 verwiesen, welche die Fixierung der Einstellage anhand eines Zylinderlagers 15 beschreibt.

Fig.3 zeigt ein in der Lageraufhülse 51 gehaltenes Zylinderlager 15 unmittelbar nach dem Motorzusammenbau und somit mit einem Null-Axialspiel, d.h. unmittelbar an der linken Stirnseite des Zylinderlagers 15 anliegendem Bund der Distanzhülse 10; in der

Darstellung gemäß Fig.4 ist das Zylinderlager 15 durch einen Axialhub des Rotors um das Axialspiel a weiter nach rechts in die Lagerhülse 51 verschoben und der Rotor wieder in die Lage gemäß Fig.3 nach links zurückgezogen dargestellt. Fig.5 zeigt die Anordnung nach Fig.4 jedoch mit einer z.B. durch Heißverstemmen aus der Kunststoff-Lagerhülse 51 herausgeformten Anlageschulter 511, die in die Lagerbohrung hineinreicht und sich an der rechten Stirnseite des Zylinderlagers 15 anlegt. Fig.6 zeigt eine Alternativausführung zur Ausbildung einer Anlageschulter 512, die durch ein außen angesetztes Druckwerkzeug P aus der Lagerhülse 51 als Anlageschulter gegen die rechte Stirnseite des Zylinderlagers 15 weggebogen wird. In vorteilhafter Weise ist der zu verbiegende Teil durch eine Einschlitzung derart lappenförmig ausgebildet, daß er gezielt durch eine in Achsrichtung druckausübende Handhabung P verformbar ist.

## Patentansprüche

1. Verfahren zur Einstellung des Axialspiels zwischen dem Rotor und dem Stator eines Motors, **dadurch gekennzeichnet**, daß ein betriebsmäßiges Festlager für die Rotorwelle (2) zur Einstellung des Axialspiels relativ zu seiner statorseitigen Lageraufnahme axial verschoben und in der Einstellage durch anschließendes Verformen der Lageraufnahme in dieser als Festlager formschlüssig fixiert wird.

2. Verfahren nach Anspruch 1, **dadurch gekennzeichnet**, daß als Lager eine über eine äußere Lageraufnahme (36) in einer Lagerhülse (51) gehaltene Kalottenlagerung (3) verwendet wird (Fig. 1,2).

3. Verfahren nach Anspruch 1, **dadurch gekennzeichnet**, daß als Lager ein in einer Lagerhülse (51) gehaltenes Zylinderlager (15) verwendet wird (Fig. 3,4).

4. Verfahren nach einem der Ansprüche 1 bis 3, **dadurch gekennzeichnet**, daß das Lager durch eine nach der Einstellung des Axialspiels aus der Lageraufnahme herausgeformte axiale Anlageschulter (511 bzw. 512) fixiert wird (Fig.5,6).

5. Verfahren nach Anspruch 4, insbesondere für eine Kunststoff-Lageraufnahme, **dadurch gekennzeichnet**, daß die Anlageschulter durch einen Heißverstemmvorgang aus der Lageraufnahme herausgeformt wird.

6. Verfahren nach Anspruch 5, insbesondere für eine Kunststoff-Lageraufnahme, **dadurch gekennzeichnet**, daß die Anlageschulter durch einen Schmelzvorgang, insbesondere einen Ultraschall-Schmelzvorgang, aus der Lageraufnahme herausgeformt wird.

7. Verfahren nach Anspruch 5, **dadurch gekennzeichnet**, daß die Anlageschulter durch einen Prägevorgang aus der Lageraufnahme herausgeformt wird (Fig.6).

## Claims

1. Method for adjusting the axial play between the rotor and the stator of a motor, characterised in that an operating fixed bearing for the rotor shaft (2) is moved axially to adjust the axial play relative to its bearing holder on the stator side and by subsequent deformation of the bearing holder it is fixed therein in the adjusted position in a form-locking manner as a fixed bearing.

2. Method according to claim 1, characterised in that a spherical bearing (3) held in a bearing sleeve (51) via an outer bearing holder (36) is used as the bearing (Fig. 1, 2).

3. Method according to claim 1, characterised in that a cylinder bearing (15) held in a bearing sleeve (51) is used as the bearing (Fig. 3, 4).

4. Method according to one of claims 1 to 3, characterised in that the bearing is fixed by an axial bearing collar (511 or 512) which is formed from the bearing holder after the axial play is adjusted (Fig. 5, 6).

5. Method according to claim 4, especially for a plastic bearing holder, characterised in that the bearing collar is formed from the bearing holder by a hot caulking process.

6. Method according to claim 5, especially for a plastic bearing holder, characterised in that the bearing collar is formed from the bearing holder by a melting process, particularly an ultrasonic melting process.

7. Method according to claim 5, characterised in that the bearing collar is formed from the bearing holder by an embossing process (Fig. 6).

**Revendications**

1. Procédé pour régler le jeu axial entre le rotor et le stator d'un moteur, caractérisé par le fait qu'on déplace axialement un palier fixe en fonctionnement prévu pour l'arbre (2) du rotor, par rapport à son logement de palier solidaire du stator, pour régler le jeu axial et qu'on le fixe en tant que palier fixe, selon une liaison par formes complémentaires, dans la position réglée, dans le logement de palier, au moyen d'une déformation ultérieure de ce logement de palier.

2. Procédé suivant la revendication 1, caractérisé par le fait qu'on utilise comme palier un palier à calotte sphérique (3) maintenu par l'intermédiaire d'un logement extérieur de palier (36) dans un coussinet de palier (51) (figures 1, 2).

3. Procédé suivant la revendication 1, caractérisé par le fait qu'on utilise comme palier un palier cylindrique (15) maintenu dans un coussinet de palier (51) (figures 3, 4).

4. Procédé suivant l'une des revendications 1 à 3, caractérisé par le fait qu'on fixe le palier au moyen d'un épaulement axial d'appui (511 ou 512), formé en saillie à partir du logement de palier, après réglage du jeu axial (figures 5, 6).

5. Procédé suivant la revendication 4, notamment pour un logement de palier en matière plastique, caractérisé par le fait qu'on forme en saillie l'épaulement d'appui sur le logement de palier, au moyen d'une opération de mattage à chaud.

6. Procédé suivant la revendication 5, notamment pour un logement de palier en matière plastique, caractérisé par le fait qu'on forme en saillie l'épaulement d'appui sur le logement de palier, au moyen d'une opération de fusion, notamment une opération de fusion à l'aide des ultrasons.

7. Procédé suivant la revendication 5, caractérisé par le fait qu'on forme en saillie l'épaulement d'appui sur le logement de palier, au moyen d'une opération d'estampage (figure 6).

FIG 1

FIG 2

FIG 3

FIG 4

FIG 5

FIG 6